# EUROPEAN PATENT SPECIFICATION

(11) **EP 1 176 346 B1**
(45) Date of publication and mention of the grant of the patent: **16.11.2005**
(21) Application number: 01115638.7
(22) Date of filing: 03.07.2001
(51) Int. Cl.: F16K 31/04, F16K 11/072, F25B 41/04, F25B 5/02, F25B 5/04

(54) **Electrically-driven valve selecting one of a plurality of refrigerant flow passages in refrigerator**
Elektrisch angetriebenes Ventil zum Wählen einer von mehreren Durchflussöffnungen in einem Kältekreislauf
Vanne actionnée électriquement permettant de sélectionner un passage d'écoulement parmi plusieurs dans un réfrigérateur

(30) Priority: 26.07.2000 JP 2000225562
(43) Date of publication of application: 30.01.2002
(73) Proprietor: KABUSHIKI KAISHA TOSHIBA, Tokyo 105-8001 (JP)
(72) Inventor: Imakubo, Kenji, Osaka Works, Ibaraki, Osaka (JP)
(74) Representative: HOFFMANN EITLE

(56) References cited:
- EP-A- 0 246 465
- EP-A- 0 316 526
- EP-A- 0 387 533
- EP-A- 0 987 504
- EP-A- 1 233 219
- US-A- 4 673 160
- US-A- 5 316 042
- US-A- 5 465 591
- US-A- 5 504 950
- US-A1- 2002 043 073

## Description

This invention relates generally to a refrigerator and a method for operating a refrigerator, including refrigerating machines with a plurality of refrigerant flow passages, and more particularly to the operation of an electrically-driven valve for selecting one of the refrigerant flow passages in such a refrigerator.

There have conventionally been provided refrigerators including a refrigerating machine with a plurality of refrigerant flow passages. Various types of switching or selector valves have been provided for switching between or among the refrigerant flow passages or selecting one of the refrigerant flow passages. The selector valves include one comprising a stepping motor as a drive source. The electrically-driven valve comprises a valve body having an inner valve chest and a valve element provided in the valve chest for rotation. The valve element is rotated upon rotation of a rotor of the stepping motor so that the refrigerant flow passages are opened and closed. Drive pulses are applied to the stepping motor so that the valve element is rotated by an angle according to the number of pulses, whereby the valve element is moved to a predetermined command position. Accordingly, a control manner for the electrically-driven valve is an open loop control in which the position of the valve element is not fed back to the stepping motor. As a result, when an external force such as vibration or shock displaces the valve element, the position of the valve element cannot be grasped.

In view of the aforesaid problem, a position initializing operation is carried out to move the valve element to an initial position thereof when the power supply is restored to its normal condition after power failure or when the valve element is out of a command position. In the position initializing operation, a sufficient number of drive pulses are applied to the motor so that the valve element can be returned to the initial position even when located farthest from the initial position.

On the other hand, the above-described electrically-driven valve is provided with a stopper preventing the valve element from moving beyond the initial position when returning to the initial position. Accordingly, the valve element collides against the stopper when reaching the initial position as the result of execution of the aforesaid position initializing operation. The collision produces noise or sound. Further, the valve element having collided against the stopper bounces, resulting in a gap between it and the stopper. Accordingly, the motor continues driving for a while even after the valve element has reached the initial position upon execution of the position initializing operation. As a result, the noise due to the collision of the valve element against the stopper is repeatedly produced disadvantageously. In particular, the noise due to the collision is produced at a larger number of times as the valve element is located near the initial position.

EP-A-0 316 526 discloses an electronic valve which is controlled by an open loop control circuit of the type discussed above.

Therefore, an object of the present invention is to provide an electrically-driven valve which can reduce noise produced during the position initializing operation and a refrigerator in which a selector valve is provided for selecting one of a plurality of refrigerant flow passages of the refrigerating machine and the noise produced during the position initialising operation for the selector valve can be reduced.

According to the present invention there is provided a method of initialising the position of a valve element for an electrically-driven valve, the valve comprising:
a valve body having a valve chest defined therein; a valve element provided in the valve chest so as to be movable between an initial position and a terminal position; a stepping motor including a rotatable rotor for moving the valve element by rotation of the rotor, the stepping motor being rotatable in two directions opposite to each other; first preventing means for preventing the valve element from moving beyond the initial position; and second preventing means for preventing the valve element from moving beyond the terminal position, wherein, in use, the stepping motor is driven on the basis of position command information relating to a position of the valve element to move the valve element to a predetermined command position, the method of initialising the valve position comprising the steps of:
   applying a first drive pulse to the stepping motor according to an amount of movement required to move the valve element from the command position to the terminal position, the first drive pulse rotating the stepping motor in a normal direction; and
   applying a second drive pulse to the stepping motor according to an amount of movement required to move the valve element from the terminal position to the initial position, the second drive pulse rotating the stepping motor in a reverse direction.

According to a further aspect of the present invention there is provided an electrically-driven valve comprising:
a valve body having a valve chest defined therein;
a valve element provided in the valve chest so as to be movable between an initial position and a terminal position;
a stepping motor including a rotatable rotor for moving the valve element by rotation of the rotor, the stepping motor being rotatable in two directions opposite to each other;
first preventing means for preventing the valve element from moving beyond the initial position:
   second prevent means for preventing the valve element from moving beyond the terminal position; and
   control means, in use, controlling the stepping motor on the basis of position command information relating to a position of the valve element to move the valve element to a predetermined command position, characterised in that:
      the control means is programmed to carry out a position initialising operation in which the control means applies a first drive pulse to the stepping motor according to an amount of movement required to move the valve element from the command position to the terminal position and thereafter applies a second drive pulse according to an amount of movement required to move the valve element from the terminal position to the initial position, the first and second drive pulses rotating the stepping motor in normal and reverse directions respectively.

   To initialise the valve, the valve element is first moved from the command position toward the terminal position upon execution of the position initializing operation. Accordingly, when displaced to the terminal position side, the valve element collides against the second preventing means, whereupon noise due to the collision is produced. In the above-described construction, however, the number of times of production of the noise due to the collision is reduced as compared with the conventional construction in which the position initializing operation is executed irrespective of the location of the valve element. Further, the valve element is stopped before the second preventing means when displaced to the initial position side.

The valve element is moved to the terminal position and further toward the initial position by an amount of movement corresponding to a distance between the terminal position and the initial position. In this case, when assuming the terminal position, the valve element is moved and stopped substantially at the initial position. Almost no noise is produced due to collision of the valve element against the first preventing means. Further, when stopped before the terminal position, the valve element collides against the first preventing means, whereupon noise due to the collision is produced. In this case, however, the number of times of production of the noise due to the collision is reduced as compared with the conventional construction for the same reason as described above. Additionally, the valve element is moved to the initial position after having been moved to the terminal position. Consequently, the valve element can reliably be moved to the initial position even when displaced to the terminal or initial position side relative to the command position.

The invention will be described, merely by way of example, with reference to the accompanying drawings in which:
FIG. 1 is a schematic view showing a refrigerator body and a refrigerating machine in a first embodiment in accordance with the present invention;
FIG. 2 is a block diagram showing an electrical arrangement of the refrigerator;
FIG. 3 is a longitudinal section of an electrically-driven three-way valve;
FIG. 4 is a bottom of the three-way valve when it is in a first cooling mode; and
FIG. 5 is also a bottom view of the three-way valve when the valve element assumes the initial or terminal position.

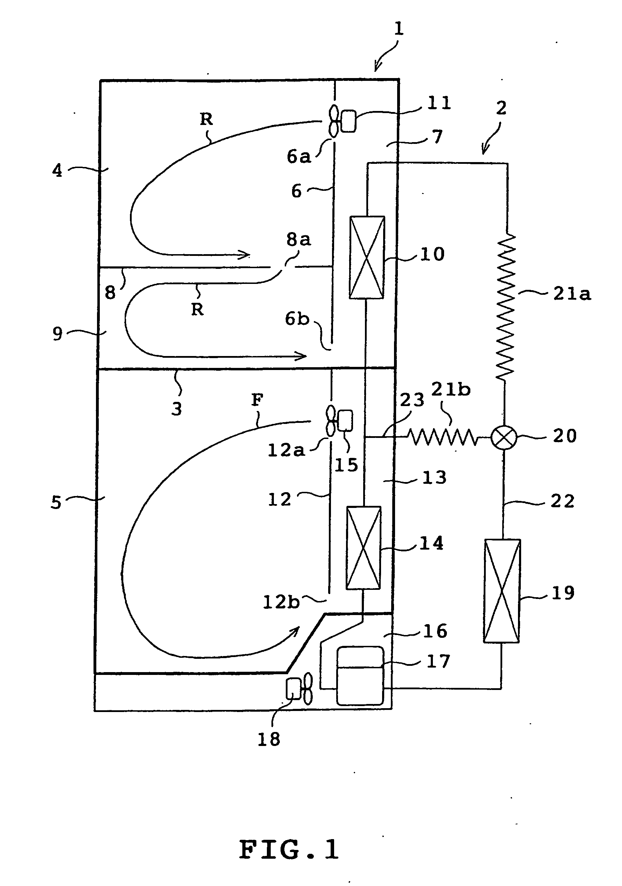

One embodiment of the present invention will be described. The invention is applied to a refrigerating machine incorporated in a refrigerator. Referring to FIG. 1, a body 1 of the refrigerator and the refrigerating machine 2 are schematically shown. The refrigerator body 1 is formed into the shape of a generally rectangular box having a front opening. The refrigerator body 1 is formed by assembling an outer casing and an inner casing and filling a space between the casings with a heat-insulating foam. An interior of the refrigerator body 1 is partitioned by a heat-insulating partition wall 3 into an upper cold storage compartment 4 and a lower freezing compartment 5. A partition wall 6 is provided in the rear of the cold storage compartment 4 to define a first evaporator chamber 7. A partition plate 8 is also provided in the lower interior of the cold storage compartment 4 to define a vegetable compartment 9.

The partition wall 6 has an outlet 6a formed in an upper portion thereof and an inlet 6b formed in a lower portion thereof. The partition plate 8 has a through communication hole 8a through which the cold storage compartment 4 communicates with the vegetable compartment 9 and vice versa. A first evaporator 10 is provided in a lower interior of the first evaporator chamber 7. A first fan 11 is provided in the first evaporator chamber 7 so as to be disposed in the outlet 6a of the partition wall 6. On the other hand, a partition wall 12 is provided in the rear of the freezing compartment 5 to define a second evaporator chamber 13. The partition wall 12 has an outlet 12a formed in an upper portion thereof and an inlet 12b formed in a lower portion thereof. A second evaporator 14 is provided in a lower interior of the second evaporator chamber 13. A second fan 15 is provided in the second evaporator chamber 13 so as to be disposed in the outlet 12a of the partition wall 12. A machine compartment 16 is defined in a lower part of the refrigerator body 1. A compressor 17 and a cooling fan 18 for cooling the compressor are provided in the machine compartment 16.

The refrigerating machine 2 comprises the first evaporator 10, the second evaporator 14, the compressor 17, a condenser 19, and two capillary tubes 21a and 21b. The first evaporator 10, the second evaporator 14, the compressor 17, the condenser 19, and the capillary tube 21a are connected to one another by refrigerant flow pipes 22. The capillary tube 21b is connected by a refrigerant flow pipe 23 so as to be in parallel to the capillary tube 21a and the first evaporator 10. Each of the refrigerant flow pipes 22 and 23 serves as a refrigerant flow passage in the invention. An electrically-driven three-way valve 20 serving as a selector valve is connected between the refrigerant flow pipes 22 and 23. The three-way valve 20 is actuated so that refrigerant discharged from the compressor 17 and then condensed to be liquefied is caused to flow through one of a first passage so that the refrigerant flows through the capillary tube 21a and both first and second evaporators 10 and 14 and a second passage so that the refrigerant flows through the capillary tube 21b and the second evaporator 14.

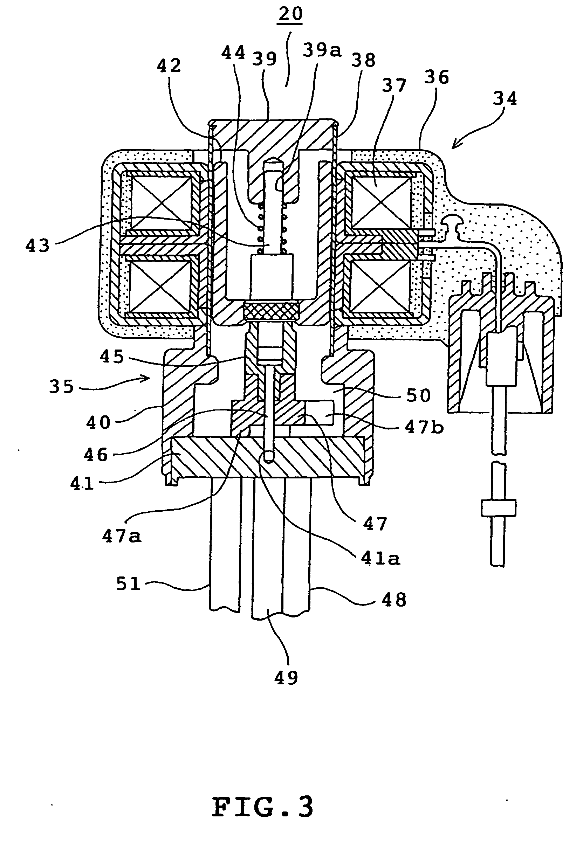

The electrically-driven three-way valve 20 will now be described in detail with reference to FIGS. 3 to 5. The valve 20 comprises a combination of a stepping motor of the inner rotor type and a valve section 35. The stepping motor 34 includes a stator 36 having an annularly wound four-phase stator winding 37. A cylindrical case 38 made of a non-magnetic material is fitted into an inner circumference of the winding 37. The case 38 has an upper end hermetically closed by an end plate 39 having a bearing portion 39a. A cylindrical valve body 40 has an upper end fitted with an outer circumference of a lower end of the case 38. A generally disc-shaped valve seat 41 having a bearing portion 41a is fitted into and secured to a lower end of the valve body 40 by plasma welding, whereupon a valve chest 50 is defined in the valve body 40. A generally cup-shaped rotor 42 is disposed opposite the stator winding 37 in the case 38. The rotor 42 is multipolar, for example, it has twenty-four poles. A rotational shaft 43 is inserted into a center of the rotor 42 to be secured. The shaft 43 has an upper end supported by the bearing portion 39a with a compression coil spring 44 provided around the shaft. The shaft 43 includes a portion located in the valve chest 50. A pin 46 and a valve element 47 are coupled via a joint 45 to the lower portion of the shaft 43. The pin 46 extends downward from the shaft 43 and has a lower end supported by the bearing portion 41a.

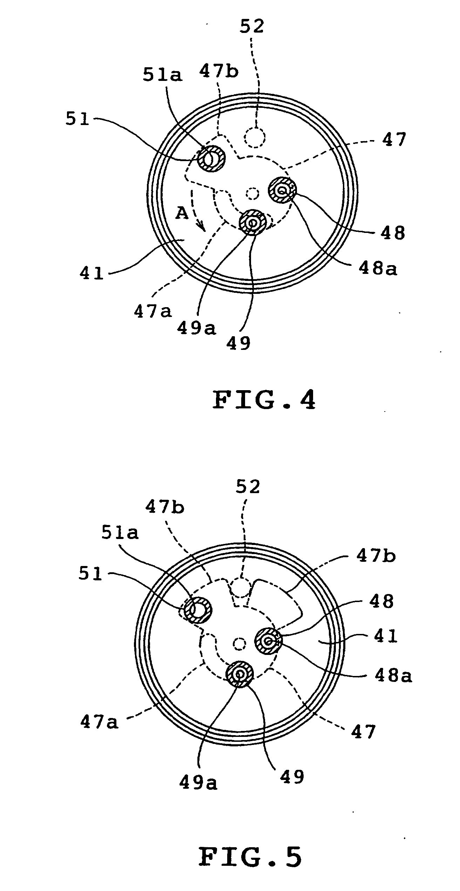

Referring to FIG. 4, the valve element 47 has a generally crescent-shaped protrusion 47a protruding downward from the underside thereof and extending along the outer circumference thereof. The outer circumference of the valve element 47 includes a generally fan-shaped striking portion 47b formed so as not to overlap the protrusion 47a. The compression coil spring 44 urges the valve element 47 such that the valve element is pressed against the valve seat 41. Accordingly, upon rotation of the rotor 42, the protrusion 47a is rotated together with the rotor while sliding on the upper face of the valve seat 41. The valve seat 41 has two through holes 48a and 49a both formed so as to be located on a locus of the protrusion 47a. First and second exit pipes 48 and 49 are connected to the holes 48a and 49a respectively. The valve seat 41 further has a through hole 51a formed outside the locus of the protrusion 47a. An entrance pipe 51 is connected to the hole 51a. The pipe 51 is further connected to a refrigerant flow pipe 22 communicating with the condenser 19. Refrigerant discharged from the compressor 17 and then condensed by the condenser 19 to be liquefied flows through the hole 51a into the valve chest 51. The first exit pipe 48 is connected to a refrigerant flow pipe 22 communicating with the capillary tube 21a, whereas the second exit pipe 49 is connected to a refrigerant flow pipe 23 communicating with the other capillary tube 21b.

A vertically extending pin-like stopper 52 is fixed on the upper face of the valve seat 41. The stopper 52 constitutes first and second preventing means in the invention. In the embodiment, the valve element 47 assumes an initial position when the striking portion 47b is in abutment with the stopper 52 on the left of the latter as shown by broken line in FIG. 5. Further, the valve element 47 assumes a terminal position when the striking portion 47b is in abutment with the stopper 52 on the right of the latter as shown by two-dot chain line in FIG. 5. The valve element 47 is rotated between the initial and terminal positions . The holes 48a and 49a are opened and closed depending on a rotational position of the valve element 47 and accordingly a position of the protrusion 47a.

The three-way valve 20 has three operation modes. A first refrigeration mode refers to a condition where the three-way valve 20 is switched so that the hole 48a is open such that the refrigerant flows through the first passage. An atmosphere in the cold storage compartment 4 is cooled under the first refrigeration mode. A second refrigeration mode refers to a condition where the three-way valve 20 is switched so that only the hole 49a is open such that the refrigerant flows through the second passage. An atmosphere in the freezing compartment 5 is cooled under the second refrigeration mode. A totally-closed mode refers to a condition where both holes 48a and 49a are closed.

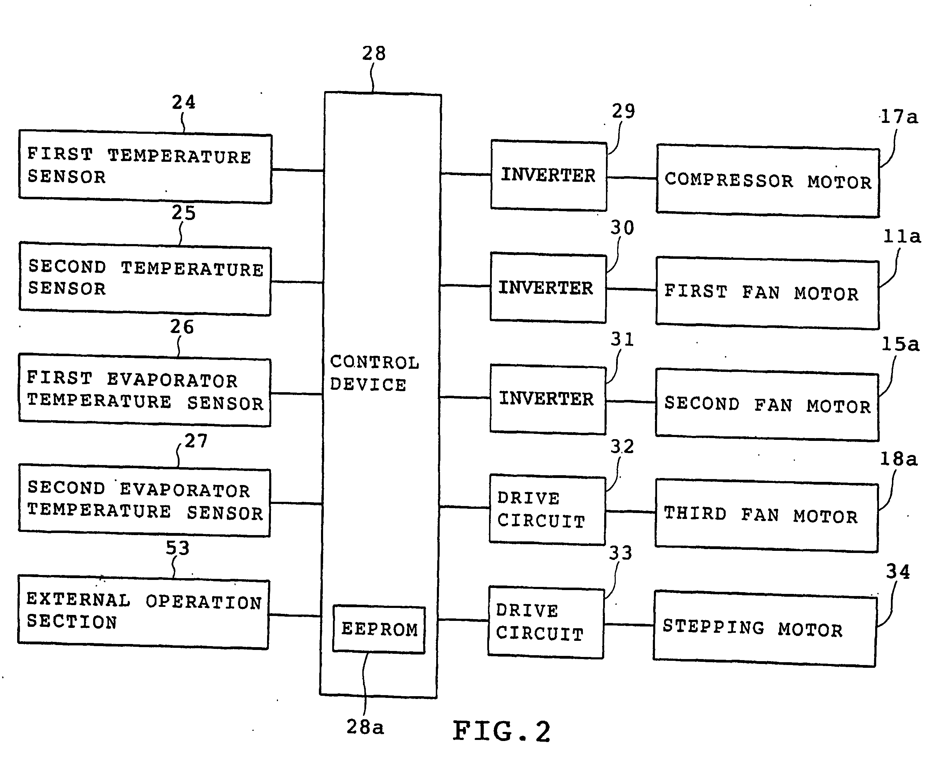

Referring now to FIG. 2, a control device 28 serving as control means comprises a microcomputer-based circuit and a non-volatile memory such as EEPROM 28a. The control device 28 has input terminals (not shown) to which a first temperature sensor 24 and a second temperature sensor 25 are connected respectively. The first and second temperature sensor 24 and 25 are provided for detecting temperatures in the cold storage and freezing compartments 4 and 5 respectively. The control device 28 further has input terminals (not shown) to which a first evaporator temperature sensor 26 and a second evaporator temperature sensor 27 are connected respectively. The first and second evaporator temperature sensors 26 and 27 are provided for detecting temperatures of the first and second evaporators 10 and 14 respectively. Each of the temperature sensors 24 to 27 comprises a thermistor, for example. The control device 28 further has an input terminal (not shown) to which an external operation section 53 is connected. The external operation section 53 is mounted, for example, on a front panel of the first door in order that the user may operate the operation section. The operation section 53 includes a quick freezing switch (not shown) which is operated to forcedly switch an operation mode of the refrigerator to the second refrigeration mode.

The control device 28 includes output terminals (not shown) to which are connected an inverter 29 for driving the compressor motor 17a, an inverter 30 for driving the first fan motor 11a, an inverter 31 for driving the second fan motor 15a, a drive circuit 32 for driving a third fan motor for compressor, and a drive circuit 33 for driving the stepping motor 34, respectively. The control device 28 stores data of a previously set upper limit temperature (5°C, for example) and lower limit temperature (2°C, for example) of the cold storage compartment 4. The control device 28 also stores data of a previously set upper limit temperature (-18°C, for example) and lower limit temperature (-21°C, for example) of the freezing compartment 5. The control device 28 further stores a control program for control of an overall operation of the refrigerator. Based on input signals from the respective temperature sensors 24 to 27 and signals from the external operation section 53, the control device 28 controls the compressor motor 17a, first, second and third fan motors 11a, 15a, and 18a according to the control program. The control device 28 further controls the stepping motor 34 so that the three-way valve 20 is switched. In the embodiment, information about the position command regarding the valve element 47 includes the input signals from the respective temperature sensors 24 to 27, the signals from the external operation section 53 and the control program.

In response to a command from the control device 28, the drive circuit 33 delivers drive pulses to the stator winding 37 of the stepping motor 34 so that first and second phases are excited, whereupon the rotor 42 is rotated at 30 pulses per second in the normal or reverse direction. Thus, when the drive pulses are supplied to the stator winding 37, the rotor 42 is rotated in the normal or reverse direction at an angle according to the number of drive pulses, so that the valve element 47 is moved to a command position. Arrow A indicates the normal direction in FIG. 4. The number of drive pulses delivered to the stator winding 37 is determined on the basis of the command position for the valve element 47 moved on the basis of the aforesaid position command information. In the embodiment, when the three-way valve 20 is switched between the first and second refrigeration modes, the control device 28 stores data of the command position in EEPROM 28a to be renewed. The number of output pulses is obtained from the comparison of the last and current command positions the data of which is stored on EEPROM 28a. Consider now the case where thirteen drive pulses are supplied to the stepping motor 34 for rotation in the normal direction while the valve element 47 is in the initial position. In this case, the protrusion 47a is located over the hole 49a of the second exit pipe 49 as shown in FIG. 4. The three-way valve 20 is in the first refrigeration mode in this state such that the second exit pipe 49 is closed and refrigerant in the valve chest 50 is caused to flow through the first exit pipe 48.

Furthermore, the protrusion 47a is located over the hole 48a of the first exit pipe 48 when sixty-one drive pulses are supplied to the stepping motor 34 for rotation in the normal direction while the valve element 47 is in the initial position. The three-way valve 20 is in the second refrigeration mode in this state such that the first exit pipe 48 is closed and refrigerant in the valve chest 50 is caused to flow through the second exit pipe 49. Furthermore, the protrusion 47a is located over both holes 48a and 49a when thirty-seven drive pulses are supplied to the stepping motor 34 for rotation in the normal direction while the valve element 47 is in the initial position. The three-way valve 20 is in the totally-closed mode in this state such that the first and second exit pipes 48 and 49 are closed. Additionally, the valve element 47 assumes the terminal position when eighty-five drive pulses are supplied to the stepping motor 34 for rotation in the normal direction while the valve element 47 is in the initial position.

As obvious from the foregoing, the three-way valve 20 is switched from the first refrigeration mode to the second refrigeration mode when forty-eight drive pulses are supplied to the valve 20 for rotation of the motor 34 in the normal direction. Further, the three-way valve 20 is switched from the second refrigeration mode to the first refrigeration mode when forty-eight drive pulses are supplied to the valve 20 for rotation of the motor 34 in the reverse direction. Additionally, the three-way valve 20 is switched from the first refrigeration mode to the totally-closed mode when twenty-four drive pulses are supplied to the valve 20 for rotation of the motor 34 in the normal direction. Also, the three-way valve 20 is switched from the second refrigeration mode to the totally-closed mode when twenty-four drive pulses are supplied to the valve 20 for rotation of the motor 34 in the reverse direction.

The refrigerating operation carried out under the control of the control device 28 will now be described. Firstly, a normal operation will be described. The control device 28 carries out the following normal operation on condition that the quick freezing switch of the external operation section 53 is not turned on, so that previously set temperatures are reached in the cold storage and vegetable compartments 4 and 9 and the freezing compartment 5 respectively. More specifically, the compressor 17 and the compressor cooling fan 18 are operated when either one or both of the temperatures in the cold storage and freezing compartments 4 and 5 exceed the respective set upper limit temperatures. As a result, the refrigerant compressed by the compressor 17 is then liquefied by the condenser to thereafter be supplied into the three-way valve 20. In this case, when both of the temperatures in the cold storage and freezing compartments 4 and 5 are above the respective upper limit temperatures, the three-way valve 20 is switched alternately to the first and second refrigeration modes. In this case, the three-way valve 20 is switched so that the first refrigeration mode is carried out for 10 minutes and the second refrigeration mode is carried out for 15 minutes.

When the three-way valve 20 is in the first refrigeration mode, the refrigerant is supplied through the capillary tube 21a sequentially into the first evaporator 10 and the second evaporator 14. More specifically, most of the refrigerant is vaporized by the first evaporator 10 and the remainder which is smaller in amount is vaporized by the second evaporator 14. The refrigerant is then returned to the compressor 17. In this case, the first fan 11 is operated so that cold air produced around the first evaporator 10 is supplied via the outlet 6a into the cold storage compartment 4, as shown by arrow R in FIG. 1. Thereafter, the cold air flows through the communication hole 8a into the vegetable compartment 9, subsequently returned through the inlet 6b into the evaporator chamber 7. The refrigerating operation is thus executed for the cold storage and vegetable compartments 4 and 9.

On the other hand, the refrigerant is supplied through the capillary tube 21b into only the second evaporator 14 when the three-way valve 20 is in the second refrigeration mode. Accordingly, the refrigerant is returned to the compressor 17 after having been vaporized by the second evaporator 14. The second fan 15 is operated in this state. In this state, the second fan 15 is operated so that cold air produced by the second evaporator 14 is supplied via the outlet 12a into the freezing compartment 5, as shown by arrow F in FIG. 1. The cold air is then returned through the inlet 12b into the second evaporator 12. The refrigerating operation is thus executed for the freezing compartment 5. Additionally, when only the temperature in the cold storage compartment 4 is above the upper limit temperature, the three-way valve 20 is switched to the first refrigeration mode so that the refrigerating operation is carried out for the cold storage compartment 4. Further, when only the temperature in the freezing compartment 5 is above the upper limit temperature, the three-way valve 20 is switched to the second refrigeration mode so that the refrigerating operation is carried out for the freezing compartment.

The temperature in the cold storage compartment 4 drops as the result of the above-described alternate refrigerating operations for the respective cold storage and freezing compartments 4 and 5. When the temperature in the cold storage compartment 4 drops to a value equal to or smaller than the lower limit temperature, the three-way valve 20 is retained in the second refrigeration mode and the operation of the second fan 15 is continued so that the refrigerating operation is continued for the freezing compartment 5. Further, when the temperature in the freezing compartment drops to a value equal to or smaller than the lower limit temperature, the three-way valve 20 is retained in the first refrigeration mode and the operation of the first fan 11 is continued so that the refrigerating operation is continued for the cold storage compartment 4. Additionally, when the temperatures in the cold storage and freezing compartments drop to values equal to or smaller than lower limit temperatures respectively, the compressor 17 and the fan 18 are stopped and the three-way valve 20 is switched to the totally-closed mode. The first and second fans 11 and 15 are also stopped.

When the quick freezing switch is turned on during the normal operation, the control device 28 carries out the quick refrigerating operation for the freezing compartment for a previously set operating time. In this quick refrigeration, the three-way valve 20 is forcedly switched to the second refrigeration mode and the second fan 15 is operated. When being in operation in this case, the first fan 11 is stopped. Further, when the temperature in the cold storage compartment 4 rises over the upper limit temperature during the quick refrigerating operation, the control device 28 interrupts the quick refrigerating operation and switches the three-way valve 20 to the first refrigeration mode with operation of the first fan 11. In this case, the second fan 15 is continuously operated. The quick refrigerating operation is restarted when the temperature in the cold storage compartment 4 drops to a predetermined temperature. This predetermined temperature for the cold storage compartment 4 is lower than the upper limit temperature and equal to or higher than the upper limit temperature.

A control manner of the control device 28 for the three-way valve 20 is an open loop control in which the position of rotor 42 or the valve element 47 is not fed back to the stepping motor 34. As a result, an actual position of the valve element 47 is sometimes displaced from the command position when the three-way valve 20 is repeatedly switched. In particular the actual position of the valve element 47 is often displaced from the command position when the three-way valve 20 is subjected to external oscillation, vibration or shock such as that due to an earthquake. In view of this problem, the control device 28 carries out a position initializing operation for the three-way valve 20 when detecting displacement of the valve element 47 from the command position. In the position initializing operation, the three-way valve 20 is moved to the initial position and thereafter to the command position. Whether the valve element 47 is displaced is detected by an increase in the temperature in the freezing compartment 5 above the upper limit temperature of the freezing compartment 5 notwithstanding the set second refrigeration mode.

The aforesaid position initializing operation will be carried out in the following manner. Firstly, the control device 28 obtains a predetermined differential number of pulses between the command position and the terminal position of the valve element 47. For example, when the valve 20 is in the first refrigeration mode, the differential number of pulses between the initial position and the command position is sixty-one and the differential number of pulses between the initial position and the terminal position is eighty-five. Accordingly, the differential number of pulses between the command position and the terminal position is twenty-four. The control device 28 then applies an obtained number of drive pulses to the stator winding 37 so that the rotor is normally rotated. In this case, when the valve element 47 is displaced in the reverse direction or in the initial position side relative to the command position, the valve element 47 is stopped before the terminal position by a distance according to an amount of displacement. Accordingly, the striking portion 47b of the valve element 47 does not strike against the stopper 52. On the other hand, when the valve element 47 is displaced in the normal direction or in the terminal position side relative to the command position, the control device 28 applies to the stator winding 37 the larger number of drive pulses than the predetermined differential number of pulses between an actual position and the terminal position. Accordingly, even after the valve element 47 reaches the terminal position and collides against the stopper 52 for the first time, the collision is continued until the motor 34 is stopped. However, the time from the strike of the valve element 47 against the stopper 52 to the stop of the motor 34 is shortened as compared with the prior art in which the number of pulses corresponding substantially to the full rotation is applied to the stator winding irrespective of the position of the valve element. As a result, the number of collision of the valve element 47 against the stopper 52 can be rendered smaller.

The control device 28 then applies 85 drive pulses to the stator winding 37 so that the rotor is rotated in the reverse direction. The number of drive pulses correspond to the predetermined one between the terminal position and the initial position. In this case, when the valve element 47 is located at the terminal position and the 85 drive pulses are applied to the stator winding 37 so that the rotor is rotated in the reverse direction, the valve element 47 reaches the initial position, stopping there. On the other hand, when the valve element 47 is stopped nearer to the initial position than to the terminal position and the 85 drive pulses are applied to the stator winding 37 so that the rotor is rotated in the reverse direction, the motor 34 is continuously driven for a while even after the valve element 47 reaches the initial position. As a result, the striking portion 47b continuously strikes against the stopper 52 for a while. In this case, too, the number of collision of the valve element 47 against the stopper 52 can be rendered smaller as compared with the prior art in which the number of pulses corresponding substantially to the full rotation is applied to the stator winding irrespective of the position of the valve element. As a result, sound due to collision upon the position initializing operation can be reduced.

According to the above-described embodiment, the position initializing operation of the valve element 47 is carried out on the basis of the position command information of the valve element, and the number of times of collision of the striking portion 47b against the stopper 52 can be reduced. Consequently, the noise due to the collision upon the position initializing operation can be reduced. Furthermore, the stepping motor 34 is used as the drive source for the three-way valve 20. Consequently, the position of the valve element 47 can readily be controlled by controlling the number of pulses applied to the motor. Additionally, the predetermined differential number of pulses between the command position and the terminal position is applied to the motor 34 and thereafter, the predetermined differential number of pulses between the terminal position and the initial position is applied to the motor 34 so that the position initializing operation is carried out for the valve element 47. Consequently, the valve element 47 can reliably be moved to the initial position even when displaced in either the normal or reverse direction relative to the command position.

Several modified forms will now be described. A quick refrigerating switch may be provided on the external operation section 53 so that the three-way valve 20 is forcedly switched to the first refrigeration mode. An input signal from the quick refrigeration switch constitutes the position command information. Further, neither quick freezing switch nor quick refrigeration switch may be provided. Further, an electrically driven two-way valve may be provided instead of the electrically driven three-way valve. Another type of motor may be employed instead of the stepping motor. The electrically-driven valve of the present invention may be used for air conditioners, ice machines, etc.

The foregoing description and drawings are merely illustrative of the principles of the present invention and are not to be construed in a limiting sense. Various changes and modifications will become apparent to those of ordinary skill in the art.

## Claims

1. A method of initialising the position of a valve element (47) for an electrically-driven valve, the valve comprising:
a valve body (40) having a valve chest (50) defined therein; a valve element (47) provided in the valve chest (50) so as to be movable between an initial position and a terminal position; a stepping motor (34) including a rotatable rotor (42) for moving the valve element (47) by rotation of the rotor (42), the stepping motor (34) being rotatable in two directions opposite to each other; first preventing means (52) for preventing the valve element (47) from moving beyond the initial position; and second preventing means (52) for preventing the valve element (47) from moving beyond the terminal position, wherein, in use, the stepping motor (34) is driven on the basis of position command information relating to a position of the valve element (47) to move the valve element (47) to a predetermined command position, the method of initialising the valve position comprising the steps of:
applying a first drive pulse to the stepping motor (34) according to an amount of movement required to move the valve element (47) from the command position to the terminal position, the first drive pulse rotating the stepping motor (34) in a normal direction; and
applying a second drive pulse to the stepping motor (34) according to an amount of movement required to move the valve element (47) from the terminal position to the initial position, the second drive pulse rotating the stepping motor (34) in a reverse direction.

2. The method of claim 1, wherein the electrically-driven valve is provided in a refrigerating machine (2) having a plurality of refrigerant flow passages (22, 23), and the valve switches the refrigerating machine (2) between or among the refrigerant flow passages (22, 23).

3. The method of claim 2, wherein the refrigerating machine (2) includes a cold storage compartment (4), a freezing compartment (5), a first evaporator (10) for cooling an atmosphere in the cold storage compartment (4) and a second evaporator (14) for cooling an atmosphere in the freezing compartment (5), that the refrigerant flow passage (22, 23) include a first passage through which refrigerant is supplied mainly to the first evaporator (10) and a second passage through which refrigerant is supplied mainly to the second evaporator (14), and that the electrically-driven three-way valve causing the refrigerant to flow selectively through the first or second passage.

4. An electrically-driven valve comprising:
a valve body (40) having a valve chest (50) defined therein;
a valve element (47) provided in the valve chest (50) so as to be movable between an initial position and a terminal position;
a stepping motor (34) including a rotatable rotor (42) for moving the valve element (47) by rotation of the rotor (42), the stepping motor (34) being rotatable in two directions opposite to each other;
first preventing means (52) for preventing the valve element (47) from moving beyond the initial position:
second prevent means (52) for preventing the valve element (47) from moving beyond the terminal position; and
control means (28), in use, controlling the stepping motor (34) on the basis of position command information relating to a position of the valve element (47) to move the valve element (47) to a predetermined command position,
**characterised in that**:
the control means (28) is programmed to carry out a position initialising operation in which the control means (28) applies a first drive pulse to the stepping motor (34) according to an amount of movement required to move the valve element (47) from the command position to the terminal position and thereafter applies a second drive pulse according to an amount of movement required to move the valve element (47) from the terminal position to the initial position, the first and second drive pulses rotating the stepping motor (34) in normal and reverse directions respectively.

5. A refrigerator comprising:
a refrigerating machine (2) having a plurality of refrigerant flow passages (22, 23); and
a selector valve (20) according to Claim 4.

6. A refrigerator according to claim 5, further comprising:
a cold storage compartment (4); and
a freezing compartment (5), wherein:
the refrigerating machine (2) includes a first evaporator (10) for cooling an atmosphere in the cold storage compartment (4) and a second evaporator (14) for cooling an atmosphere in the freezing compartment (5) ;
the refrigerant flow passages (22, 23) include a first passage through which refrigerant is supplied mainly to the first evaporator (10) and a second passage through which refrigerant is supplied mainly to the second evaporator (14) ; and
the selector valve (20) comprises an electrically-driven three-way valve selectively causing the refrigerant to flow through the first or second passage.

## Patentansprüche

1. Ein Verfahren zum Initialisieren der Position eines Ventilelementes (47) für ein elektrisch angetriebenes Ventil, wobei das Ventil umfasst:
einen Ventilkörper (40) mit einem darin definierten Ventilkasten (50); ein Ventilelement (47), das in dem Ventilkasten (50) bereitgestellt wird, um beweglich zwischen einer Anfangsposition und einer Endposition zu sein; einen Schrittmotor (34) einschließlich eines drehbaren Rotors (42) zum Bewegen des Ventilelementes (47) durch eine Drehung des Rotors (42), wobei der Schrittmotor (34) in zwei entgegengesetzte Richtungen drehbar ist; ein erstes Verhinderungsmittel (52) zum Verhindern, dass sich das Ventilelement (47) über die Anfangsposition hinaus bewegt; und ein zweites Verhinderungsmittel (52) zum Verhindern, dass sich das Ventilelement (47) über die Endposition hinaus bewegt, wobei im Betrieb der Schrittmotor (34) auf der Basis einer Positionsbefehlinformation bezüglich einer Position des Ventilelementes (47) angetrieben wird, zum Bewegen des Ventilelementes (47) zu einer vorbestimmten Befehlsposition, wobei das Verfahren zum Initialisieren der Ventilposition die Schritte umfasst zum:
Anlegen eines ersten Antriebspulses an den Schrittmotor (34) gemäß einem Umfang einer zum Bewegen des Ventilelementes (47) von der Befehlsposition zu der Endposition erforderlichen Bewegung, wobei der erste Antriebspuls den Schrittmotor (34) in eine normale Richtung dreht; und
Anlegen eines zweiten Antriebspulses an den Schrittmotor (34) gemäß einem Umfang einer zum Bewegen des Ventilelementes (47) von der Endposition zu der Anfangsposition erforderlichen Bewegung, wobei der zweite Antriebspuls den Schrittmotor (34) in eine umgekehrte Richtung dreht.

2. Verfahren gemäß Anspruch 1, wobei das elektrisch angetriebene Ventil in einer Kühlmaschine (2) mit einer Mehrzahl von Kühlmittelflussleitungen (22, 23) bereitgestellt ist, und das Ventil die Kühlmaschine (2) zwischen oder unter den Kühlmittelflussleitungen (22, 23) schaltet.

3. Verfahren gemäß Anspruch 2, wobei die Kühlmaschine (2) einen Kaltlagerraum (4), einen Gefrierraum (5), einen ersten Verdampfer (10) zum Kühlen einer Atmosphäre in dem Kaltlagerraum (4) und einen zweiten Verdampfer (14) zum Kühlen einer Atmosphäre in dem Gefrierraum (5) einschließt, dass die Kühlmittelflussleitung (22, 23) eine erste Leitung, durch die Kühlmittel hauptsächlich zu dem ersten Verdampfer (10) geliefert wird, und eine zweite Leitung, durch die Kühlmittel hauptsächlich zu dem zweiten Verdampfer (14) geleitet wird, einschließt, und dass das elektrisch angetriebene Dreiwegeventil bewirkt, dass das Kühlmittel wahlweise durch die erste oder zweite Leitung fließt.

4. Ein elektrisch angetriebenes Ventil umfassend:
einen Ventilkörper (40) mit einem darin definierten Ventilkasten (50);
ein Ventilelement. (47), das in dem Ventilkasten (50) bereitgestellt wird, um beweglich zwischen einer Anfangsposition und einer Endposition zu sein;
einen Schrittmotor (34) einschließlich eines drehbaren Rotors (42) zum Bewegen des Ventilelementes (47) durch Drehen des Rotors (42), wobei der Schrittmotor (34) in zwei entgegengesetzte Richtungen drehbar ist;
ein erstes Verhinderungsmittel (52) zum Verhindern, dass das Ventilelement (47) sich über die Anfangsposition hinaus bewegt;
ein zweites Verhinderungsmittel (52) zum Verhindern, dass das Ventilelement (47) sich über die Endposition hinaus bewegt, und
ein Steuerungsmittel (28), das im Betrieb den Schrittmotor (34) auf der Basis einer Positionsbefehlsinformation bezüglich einer Position des Ventilelementes (47) zum Bewegen des Ventilelementes (47) zu einer vorbestimmten Befehlsinformation steuert,
**dadurch gekennzeichnet, dass**:
das Steuerungsmittel (28) programmiert ist, um eine Positionsinitialisierungsoperation auszuführen, in der das Steuerungsmittel (28) einen ersten Antriebspuls an den Schrittmotor (34) gemäß einem Betrag einer zum Bewegen des Ventilelementes (47) von der Befehlposition zu der Endposition erforderlichen Bewegung anlegt, und danach einen zweiten Antriebspuls gemäß einem Umfang einer zum Bewegen des Ventilelementes (47) von der Endposition zu der Anfangsposition erforderlichen Bewegung anlegt, wobei der erste und zweite Antriebspuls den Schrittmotor (34) in eine normale und umgekehrte Richtung entsprechend drehen.

5. Ein Kühlschrank umfassend:
eine Kühlmaschine (2) mit einer Mehrzahl von Kühlmittelflussleitungen (22, 23); und
einem Wählerventil (20) gemäß Anspruch 4.

6. Ein Kühlschrank gemäß Anspruch 5, ferner umfassend:
einen Kaltlagerraum (4); und
einen Gefrierraum (5), wobei:
die Kühlmaschine (2) einen ersten Verdampfer (10) zum Kühlen einer Atmosphäre in dem Kaltlagerraum (4) und einen zweiten Verdampfer (14) zum Kühlen einer Atmosphäre in dem Gefrierraum (5) einschließt;
die Kühlmittelflussleitungen (22, 23) eine erste Leitung, durch die Kühlmittel hauptsächlich zu dem ersten Verdampfer (10) geliefert wird, und eine zweite Leitung, durch die Kühlmittel hauptsächlich zu dem zweiten Verdampfer (14) geleitet wird, einschließt, und
das Wählerventil (20) ein elektrisch angetriebenes Dreiwegeventil umfasst, dass wahlweise bewirkt, dass das Kühlmittel durch die erste oder zweite Leitung fließt.

## Revendications

1. Procédé destiné à initialiser la position d'un élément (47) de vanne pour une vanne entraînée électriquement, la vanne comprenant :
un corps (40) de vanne ayant une chambre (50) de vanne définie dans celui-ci ; un élément (47) de vanne prévu dans la chambre (50) de vanne afin d'être mobile entre une position initiale et une position terminale ; un moteur pas-à-pas (34) comprenant un rotor rotatif (42) destiné à déplacer l'élément (47) de vanne par rotation du rotor (42), le moteur pas-à-pas (34) pouvant être mis en rotation dans deux directions opposées l'une à l'autre ; un premier moyen de prévention (52) destiné à empêcher l'élément (47) de vanne de se déplacer au-delà de la position initiale, et un second moyen (52) de prévention destiné à empêcher l'élément (47) de vanne de se déplacer au-delà de la position terminale, dans lequel, en cours d'utilisation, le moteur pas-à-pas (34) est entraîné sur la base des informations de commande et de position concernant une position de l'élément (47) de vanne pour déplacer l'élément (47) de vanne jusqu'à une position de commande prédéterminée, le procédé d'initialisation de la position de vanne comprenant les étapes consistant à :
appliquer une première impulsion d'entraînement au moteur pas-à-pas, (34) selon une quantité de mouvements requise pour déplacer l'élément (47) de vanne de la position de commande à la position terminale, la première impulsion d'entraînement mettant en rotation le moteur pas-à-pas (34) dans une direction normale ; et
appliquer une seconde impulsion d'entraînement au moteur pas-à-pas (34) selon une quantité de mouvement requise pour déplacer l'élément (47) de vanne de la position terminale à la position initiale, la seconde impulsion d'entraînement mettant en rotation le moteur pas-à-pas (34) dans une direction inverse.

2. Procédé selon la revendication 1, dans lequel la vanne entraînée électriquement est prévue dans une machine frigorifique (2) ayant une pluralité de passages d'écoulement (22, 23) de fluide frigorigène, et la vanne fait basculer la machine frigorifique (2) entre ou parmi les passages d'écoulement (22, 23) de fluide frigorigène.

3. Procédé selon la revendication 2, dans lequel la machine frigorifique (2) comprend un compartiment de stockage frigorifique (4), un compartiment de congélation (5), un premier évaporateur (10) destiné à refroidir une atmosphère dans le compartiment de stockage frigorifique (4) et un second évaporateur (14) destiné à refroidir une atmosphère dans le compartiment de congélation (5), **caractérisé en ce que** les passages d'écoulement (22, 23) de fluide frigorigène comprennent un premier passage par lequel un fluide frigorigène est fourni principalement au premier évaporateur (10) et un second passage par lequel un fluide frigorigène est fourni principalement au second évaporateur (14), et **en ce que** la vanne à trois voies entraînée électriquement oblige le fluide frigorigène à s'écouler de façon sélective par le premier ou le second passage.

4. Vanne entraînée électriquement comprenant :
un corps (40) de vanne ayant une chambre (50) de vanne définie dans celui-ci ;
un élément (47) de vanne prévu dans la chambre (50) de vanne afin d'être mobile entre une position initiale et une position terminale ;
un moteur pas-à-pas (34) comprenant un rotor rotatif (42) destiné à déplacer l'élément (47) de vanne par rotation du rotor (42), le moteur pas-à-pas (34) pouvant être mis en rotation dans deux directions opposées l'une a l'autre ;
un premier moyen de prévention (52) destiné à empêcher l'élément (47) de vanne de se déplacer au-delà de la position initiale ;
un second moyen de prévention (52) destiné à empêcher l'élément (47) de vanne de se déplacer au-delà de la position terminale ; et
un moyen de commande (28), commandant en cours d'utilisation, le moteur pas-à-pas (34) sur la base des informations de commande de position concernant une position de l'élément (47) de vanne pour déplacer l'élément (47) de vanne jusqu'à une position de commande prédéterminée,
**caractérisée en ce que** :
le moyen de commande (28) est programmé pour exécuter une opération d'initialisation de position dans laquelle le moyen de commande (28) applique une première impulsion d'entraînement au moteur pas-à-pas (34) selon une quantité de mouvements requise pour déplacer l'élément (47) de vanne de la position de commande à la position terminale et par la suite applique une seconde impulsion d'entraînement selon une quantité de mouvements requise pour déplacer l'élément (47) de vanne de la position terminale à la position initiale, les première et seconde impulsions d'entraînement mettant respectivement en rotation le moteur pas-à-pas (34) dans des directions normales et inverses.

5. Réfrigérateur comprenant :
une machine frigorifique (2) ayant une pluralité de passages d'écoulement (22, 23) de fluide frigorigène ; et
une vanne de sélection (20) selon la revendication 4.

6. Réfrigérateur selon la revendication 5, comprenant en outre :
un compartiment de stockage frigorifique (4); et
un compartinient de congélation (5), dans lequel :
la machine frigorifique (2) comprend un premier évaporateur (10) destiné à refroidir une atmosphère dans le compartiment de stockage frigorifique (4) et un second évaporateur (14) destiné à refroidir une atmosphère dans le compartiment de congélation (5) ;
les passages d'écoulement (22, 23) de fluide frigorigène comprennent un premier passage par lequel un fluide frigorigène est fourni principalement au premier évaporateur (10) et un second passage par lequel un fluide frigorigène est fourni principalement au second évaporateur (14) ; et
la vanne de sélection (20) comprend une vanne à trois voies entraînée électriquement obligeant de façon sélective le fluide frigorigène à s'écouler par le premier ou le second passage.
